# EUROPEAN PATENT SPECIFICATION

(11) **EP 2 171 159 B1**
(45) Date of publication and mention of the grant of the patent: **17.10.2018**
(21) Application number: 08766926.3
(22) Date of filing: 12.06.2008
(51) Int. Cl.: E02B 17/02, B63B 9/06

(54) **DEVICE AND METHOD FOR MARINE TOWER STRUCTURE**
VORRICHTUNG UND VERFAHREN FÜR EINE MEERESTURMSTRUKTUR
DISPOSITIF ET PROCÉDÉ POUR UNE STRUCTURE DE TOUR MARINE

(30) Priority: 29.06.2007 NO 20073363
(43) Date of publication of application: 07.04.2010
(73) Proprietor: Seatower AS, 0369 Oslo (NO)
(72) Inventor: KARAL, Karel, N-0778 Oslo (NO)
(74) Representative: Protector IP Consultants AS
(86) International application number: PCT/NO2008/000213
(87) International publication number: WO 2009/005357

(56) References cited:
- WO-A1-2005/057006
- FR-A1- 2 382 546
- GB-A- 1 004 164
- GB-A- 1 004 164
- GB-A- 2 365 905
- GB-A- 2 378 679
- GB-A- 2 388 164
- GB-A- 2 398 543
- US-A- 4 158 516
- US-A1- 2004 169 376

## Description

The invention relates to structures for the support of installations above a water surface, where the structures rest on the bottom below the water surface. More specifically, the invention relates to an arrangement and a method for a marine tower structure as disclosed in the preamble of the attached claims. The invention is directed in particular to the support of wind turbines, radar installations and other devices that are to be positioned above the water surface, and especially at a certain height above the water surface.

It is obvious to those of skill in the art that the uppermost section of the structure that supports the device such as the wind turbine (hereafter referred to as "the tower") must be a slender structure in order to keep the environmental loads (wind, waves and current) to a minimum and so as not to come into conflict with the actual device, e.g., the blades of the wind turbine as they rotate. A particular challenge in offshore installations is that the tower must be dimensioned to take up operating and environmental loads without the tower moving to any appreciable degree or being subjected to undesirable vibrations.

Characteristic natural features which affect the technical solution of typical tower structures close to shore or in small water depths are:
1. Unfavourable conditions for foundation work (uneven/sloping seabed, inhomogeneous seabed masses, earth and seabed properties which require foundation work using piles driven into the seabed (usually the most expensivesolution for foundation work).
2. Design wave loads are of substantial size and affect the whole structural component that is below the water surface, i.e., more or less right down to the seabed.

Known solutions are based on a concept where the lower part of the structure is given a fixed foundation on the seabed and then an upper part, typically in the form of a circular-cylindrical tower, is transported to the site, lifted onto and secured to the pre-installed lower part.

An example of a known tower structure for a wind turbine is shown in JP2003206852, where a lattice structure has a cross-sectional shape of an equilateral triangle. The structure has a relatively slender upper portion, whilst it is substantially wider further down and below the water surface. The structure is fixed to the seabed using piles.

Furthermore, JP20040002819 shows a relatively slender tower resting on a submerged platform that is fixed to the seabed by piles. JP2006037397 teaches a method for the installation of a tower of the monopile type by means of piling, where the method comprises the use of a jack-up rig equipped with a mobile crane. Moreover, US 2006/0222465 and WO 2006/004417 teach tower structures where the lower part is a lattice structure of the type used in connection with oil installations ("jacket") and the upper part of the tower (typically from above the water surface) is a slender, tubular structure.

Of the prior art, GB A 2 265 905 teaches an offshore tower structure according to the preamble of claim 1.

All prior art solutions have a number of drawbacks, as for example:
1. The towers must be transported to the site (often on barges) in two or more parts, and assembled in-situ.
2. Assembly and installation call for large (and costly) crane vessels.
3. Low values for permitted wave height and wind speed limit time periods in which efficient assembly and installation can be done.
4. Foundation work on the seabed is, as a rule, costly, piles that are driven into the seabed must often be used, and expensive ground surveys must often be carried out at a substantial depth below seabed level.
5. The installation often calls for work at great heights.
6. Removal after end of service life is demanding and requires specialised equipment.

FR2382546, which is equivalent to GB1576581, describes a structure for supporting a platform. This includes a telescopic device with two cylinders of which one is adapted to move vertically in relation to the other. The structure can only be erected from an initial vertical position.

GB1004164 describes a structure in the form of a tower for supporting a platform. The cylindrical column is divided onto sections by partitions. However, the column is a unitary structure where no section of the structure is moveable relative to other sections. One end of the column is filled with sand to have a slight negative buoyancy, while the opposite end is filled with air to have a positive buoyancy. Thereby the end of the column that has negative buoyancy must be kept floating by pontoons to be able to transport the column in a horizontal position. When the column has reached the destination, the sections are filled with sand.

The need for pontoons makes the towing of the column quite risky. The pontoons have to be removed carefully before the installation, and the sand filled end of the column has to be kept up by a crane while the installation takes place. Sand also has to be provided during the installation.

There is therefore a need for an arrangement and a method that can remedy these and other defects of the prior art.

Thus, according to the invention there is provided a tower structure for use in a body of water, comprising a hollow outer section having a first end equipped with an opening, wherein an inner section is telescopically accommodated in the cavity of the outer section through the opening in the said first end and is telescopically movable in the outer section from a position in which essentially the whole of the inner section is accommodated in the outer section to a position in which a length of the inner section projects out above the first end of the outer section, characterised in that the inner section is divided by means of partitions into a plurality of chambers fluid-connected via ducts and openings, where at least one chamber is fluid-connected via at least one duct to a source for a ballasting fluid, and where a chamber at a second end of the outer section has an inlet for ballast water for an initial tilt of the tower structure, whereby the chambers can selectively and by gradual flow through the openings be filled with ballasting fluid, the openings being situated in the top of all the partitions when the tower structure is in the horizontal position.

According to the invention, there is also provided a method for installation of the tower structure, characterised by the steps of:
a) inserting the inner section (3) into the outer section (2) and placing the connected sections floating, essentially horizontally, in a body of water having a water surface (21);
b) filling a selection of chambers (6') with a ballasting fluid via ducts (10, 10');
c) closing inlet valves (13) for ballasting fluid and pressurising the chambers (6, 6') using a gas;
d) towing the structure in the body of water to an installation site;
e) opening an inlet into and preferably also an outlet out of the lowermost part (5) to give the tower a tilt which then causes the ballasting fluid originally in ballast chamber (6') to flow to and collect in the lowermost part of the inner section (3), whereby the tower structure (1) is made to rotate in the body of water and the second end (5) of the outer section moves towards a substructure (15) on the bottom below the body of water;
f) raising the tower structure to an almost vertical position in the body of water, the second end of the outer section being supported by the substructure (15) on the bottom;
g) by means of gas pressure, displacing all or a predetermined amount of the ballasting fluid out of the inner section and the outer section, whereby the inner section moves relative to the outer section so that a portion of the inner section extends a distance beyond the first end of the outer section, preferably above the water surface (21);
h) locking the inner section and the outer section in relation to one another.

The invention seeks to solve most of the negative features of today's technology, especially those associated with transport and installation of the structure (including its removal after the end of its service life). Transport and installation constitute a substantial proportion of the total costs of the structure.

The invention remedies some of the defects of the prior art in that:
1. A large proportion of the installation work can be done on shore.
2. All transport work and most of the installation work offshore is done primarily with the aid of a towing vessel.
3. The foundation work is simplified and does not require that parts of the substructure penetrate so deep into the seabed. This goes a long way towards eliminating the need for costly specialist equipment and expensive ground surveys at substantial depths below the seabed.
4. The foundation work is fairly independent of uneven or sloping seabed.

The inventive solution resides in the design of the tower that is composed of two almost equally long sections (an outer section and an inner section) which are assembled telescopically. For transport and installation, the inner section is mounted within the outer section, which makes it practically possible to transport and install towers of substantial size. Once the assembled tower is at the installation site and secured in a vertical position, the inner (uppermost) section is extended out of the outer (lowermost) section until the inner section is secured in position and held by the outer section.

The extension of the inner section can advantageously be done by means of an interaction of natural forces, i.e., gas expansion on pressure drops and buoyancy, which will be described in more detail below. An especially advantageous utilisation is
obtained if the tower is built separately, i.e., without any device/support that holds the tower in a vertical position when installed and during use of the tower, and that the building of the tower is carried out in a horizontal position (as opposed to an upright position). Then an advantageous method is obtained.
1. Building and assembly in a horizontal position (on shore, a barge and the like).
2. Transfer to floating position, still horizontal. When constructed on shore, the tower can usually be launched directly into the water, e.g., by means of sliding or lifting. When constructed on a barge, or if other circumstances so dictate (e.g., maritime aspects of the construction site), the tower is transported in a horizontal position on a barge to a suitable unloading site.
3. The towing is carried out with the tower floating to the offshore installation site
4. The lowermost (outer) section of the tower (still in retracted position) is run to a pre-installed substructure and then raised.
5. The tower is moved to the vertical position and secured.
6. The inner section is pushed out of the outer section until fixing has been engaged/carried out.

The inventive solution of the tower comprising two almost equally long sections that are assembled telescopically can also be used in solutions where the tower is held in a vertical position and secured to the seabed in another way than by means of stays. By way of example, the tower can be integrated in a lattice structure that is designed and provided with a foundation in a known way. Transport to the installation site can be done as a tow in water with the structure either horizontal or upright. Such a solution will often require the use of several buoyancy elements (separate/reusable or integrated). If the structure is towed upright, the buoyancy elements can be simplified in that the equipment for the gravity transfer of the ballast water is not necessary.

The invention will now be described with the aid of the attached figures, where like reference numerals designate like parts.
Figure 1 is a schematic diagram of the arrangement according to the invention seen from one side, and shows the tower comprising an outer section and an inner section which is essentially accommodated in the outer section.
Figure 2 shows a longitudinal section of an embodiment of the inner section of the tower according to the invention.
Figure 3 is a longitudinal section of the tower shown in Figure 1, and shows the inner section accommodated within the outer section, floating in a body of water in connection with installation on a substructure on the seabed.
Figure 4 corresponds to Figure 3, but shows another stage of the installation process.
Figure 5 is a cross-section of the tower according to the invention, and shows a support of the inner section in the outer section.
Figure 6 is a schematic diagram of the tower according to the invention installed on a seabed and supporting a wind turbine.
Figure 7 corresponds in the main to Figure 6, but shows an alternative mooring.
Figures 8 and 9 are respectively a vertical and horizontal section through an anchor shown in Figures 6 and 7.
Figure 10 shows an embodiment of a substructure for the tower, seen from one side.
Figure 11 shows the same substructure as in Figure 10, seen from above.
Figure 12 is a schematic diagram of the tower under tow in a body of water.
Figure 13 is a schematic diagram of an installation site for the tower.
Figures 14-17 show different phases of the installation of the tower.
Figure 18 shows a longitudinal section of the tower in position against a seabed and shows a sequence (1-5) of how the inner section is extended out of the outer section.
Figures 19 and 20 show, in a side view and an end view respectively, the tower according to the invention with a buoyancy element mounted thereon.
Figure 21 shows the tower with a buoyancy element mounted thereon and in bearing contact with a substructure on a seabed.
Figure 22 shows an erection sequence (1-5) of the tower with a buoyancy element
   mounted thereon.
Figure 23 is a sectional view of an embodiment of an anchor.
Figures 24 and 25 show an anchor under tow in a body of water.
Figure 26 shows a substructure equipped with a buoyancy element.
Figure 27 is a schematic diagram of a plurality of towers with partly common anchors.

The device according to the invention comprises a tower structure (hereafter referred to as tower) 1 which comprises a hollow, preferably tubular outer section 2 with a first end 4 which is open and a second end 5 which is closed. Inside the cavity of the outer section 2 there is inserted an inner, preferably tubular section 3 through the said first end 4. The inner section 3 can thus move telescopically inside the outer section 2 in a way that will be described in more detail below.

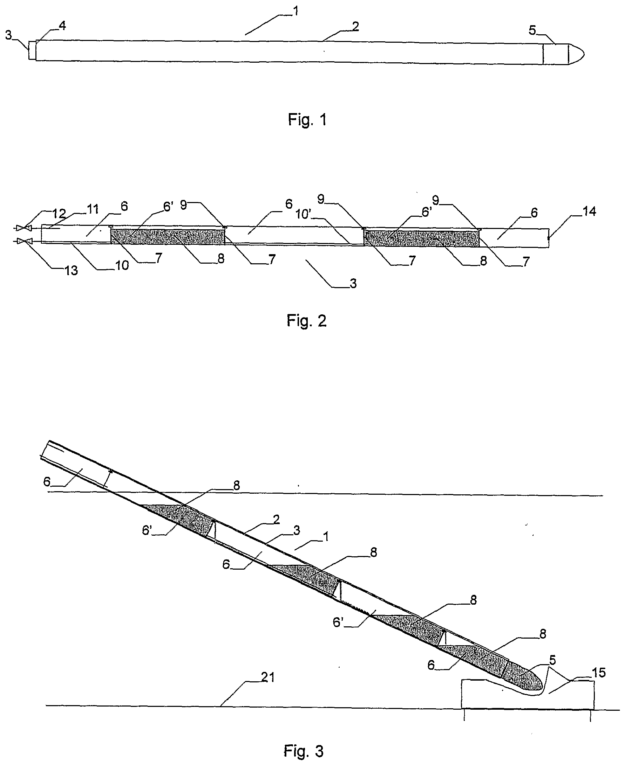

Figure 1 is a schematic diagram of the tower 1 and shows the outer section 2 and the inner section 3 in a substantially retracted position, for example, for transport and installation. The second, closed end 5 of the outer section 2 is rounded for reasons that will be explained below. The inner and the outer sections are preferably cylindrical. The internal diameter of the outer section 2 is sufficiently greater than the external diameter of the inner section 3. Outer section 2 is open at a first end 4 so that water can flow freely in and out as the water level on the outside changes. The inner section 3 is closed and provided with a number of chambers 6 and pressurised with gas so that the water pressure at the installation site will not result in unacceptably large external stresses, and push-out of this section can be carried out with a sufficient safety margin, which is explained below. To obtain desired extension, the length of the sections 2 and 3 must be set based on the requirement of excess force (buoyancy) at the end of the pull-out during installation in a body of water.

Figure 2 is a longitudinal section of the inner section 3. For the first installation phases lowering the lower end and erecting the tower) ballast (e.g., water) is required which cannot shift during the tow to the installation site and which subsequently can collect at the bottom of the inner section 3. This is necessary to enable the bottom end of the tower 1 to be lowered to the seabed to a resting position and to allow the whole tower to subsequently be drawn up into an upright vertical position. Therefore, the inner space of the inner section 3 is divided by means of partitions 7 into a suitable number of chambers 6. These chambers are filled to a certain level with ballast water 8 before the tow to the installation field begins. The amount of ballast water is determined with a view to obtaining small net buoyancy for the whole tower so that stresses during towing in waves do not impose damaging alternating stress loads on the structure which could unduly reduce the structure's capacity against fatigue.

Figure 2 also shows that all the inner chambers 6 are open so that the gas pressure in all the chambers is at any given time equal. In this example, passages 9 are shown in the top of all the partitions 7. The size and configuration of these passages are designed so that the amount of water that can pass through them as a result of sloshing in the chambers initiated by motions during the tow is either prevented or less than the system can withstand, and by the rate of water which can passes freely during submersion of the outer (lower) section down to the seabed. This rate should be sufficient to allow the water to shift during the time it takes to perform installation operations from the start of submersion until the raising of the tower can start.

It is anticipated that these operations from the start of the submersion of one of the end to the seabed until erection of the tower can begin will take two to six hours. It is desirable that during this time all ballast water moves and collects in the lower end of the inner section 3. The practical check that all water has shifted as desired is by the position in the water that the tower has assumed, namely its angle and thus the length that is under water. Since it is not possible to get the water back into the chambers once submersion has started, the submersion equipment (wires and winch on the towing/installation vessel) must be dimensioned for unintended shifting of all ballast water before the lowermost part of the tower has been put down on a substructure on the seabed. It is obvious that the tower cannot sink by accident, except in the improbable case of significant damage to the well-protected upper section.

Filling with ballast water is done after the tower has been fully fabricated and transferred into a floating position in a body of water. Ballast water is filled through pipe 10 and the displaced air flows out of the chambers through the openings 9 and out of the inner section 3 through pipe 11 into the atmosphere. After the desired amount of ballast water has been filled into the chambers 6', the pipe 10 is closed by the valve 13 and the whole inner section is pressurised with gas. The gas is forced in through pipe 11 until desired pressure has been reached and the pipe is closed by valve 12. Both water and gas pipes are protected against emissions in that the pipe terminations are plugged and/or enclosed in a structural protection means.

In the lower end of the inner section 3 there is located an outlet 14 for ballast water that is to be discharged in order to allow the pushing out of section 3 from section 2 to be carried out. In addition to remote controlled valves, the opening of this valve can be done using a mechanical connection between the valve and the second end of the buoyancy element which, when the element is rotated in the water (e.g., in connection with installation of a structure as discussed above), will be above the water surface and thus easily accessible. These solutions are known to those of skill in the art (valves that open with the aid of electrical or acoustic signals; alternatively, valves or plugs may be used which open with the aid of a pulling device connected to the second end of the buoyancy body, or hydraulically; one of the solutions may be a backup for the other).

An embodiment of the inner section 3 is also described in a Norwegian patent application filed by the same applicant as in this case, and filed on the same date as this patent application.

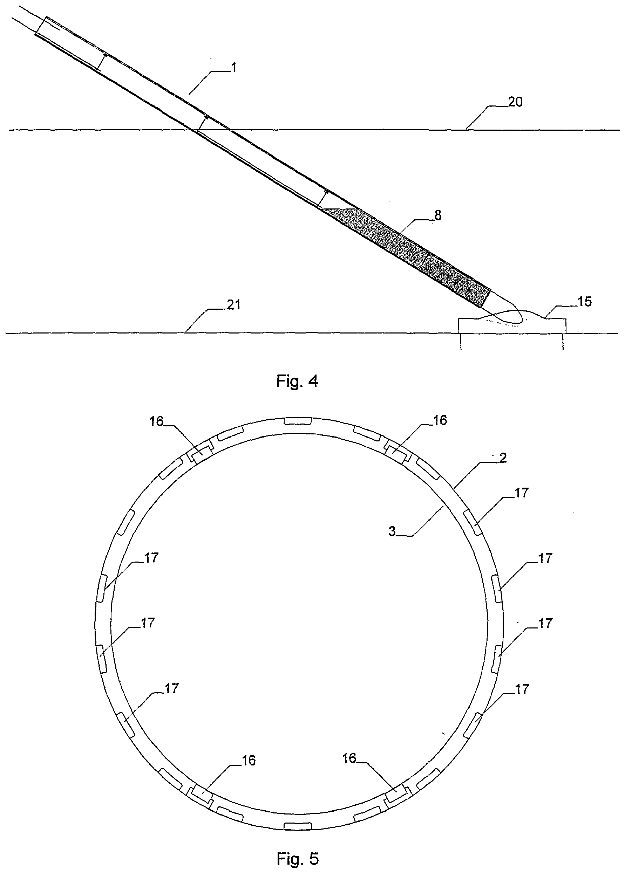

Figure 3 shows a longitudinal section through the tower, but in a position immediately after submersion of the lower end down to a substructure 15 resting on a seabed 21. As explained below, initiation of the submersion is carried out in that a chamber in the lower end 5 of the outer section is filled with ballast and thus sets the whole tower in a rotary motion in which the lower end 5 moves downwards in the body of water controlled by a lowering line from the surface. The tower is given a tilt in the water which gradually increases at the same rate as the lowering rate whilst the amount of ballast water in the inner section 3 which flows down towards the lower part increases. The ballast water 8, distributed in individual chambers, continues to flow freely towards the lower end. If the lower end of the tower is placed on a substructure before all the ballast water has shifted, the tower will rise gradually until all ballast water collects at the bottom of the inner section, and a stable position is assumed as shown in Figure 4 where all ballast water 8 has collected in the lowermost end and the weight on the substructure 15 has increased.

Figure 5 shows a cross-section through the inner section 3 of the tower inside the outer section 2. The inner section 3 is supported against the outer section 2 by a plurality of rollers 16. The rollers are used for retraction and push-out of the inner section 3 into and out of the outer section 2, and also for holding the inner section in a centric position relative to the outer section. Since the load from the inner section 3 in air is downward (weight) and in water is upward (buoyancy), it is advantageous to have two pairs of rollers 16 (one pair at the bottom and the other at the top) in each set that holds the sections in a stable position relative to each other. Several sets of such rollers are mounted along the tower.

Furthermore, in the same circular space between the outer section 2 and the inner section 3 there are devices for securing the sections to each other. These include two parts located in the area where the outer section 2 overlaps the inner section 3 in the pushed-out stated and at a distance from one another to obtain strength for momental stresses. One practical solution is in principle based on two sets of conical members/wedges, one mounted on the outside of the inner section 3 and the other on the inside of the outer section 2. For the sake of clarity, the figure shows only wedge means 17 that is mounted on the inside of the outer section 2. At the end of the push-out of the inner section 3 out of the outer section 2, the wedges are guided in towards one another so that the sections are centered and the wedges are pressed against one other in close contact. Locking in the vertical direction is also done by means of, e.g., a horizontal ring with wedge-shaped teeth fastened to the outer section 2 and configured so that wedges on the inner section can pass on the way up through recesses in the ring. After the push-out has been completed, the ring is turned until close contact with the lower edge of wedges on the inner section 3 is obtained. Another solution is in principle based on the securing in a vertical position being done in that a ring mounted in the inner section 3 on the way up during the push-out lifts a flap device that falls back into place after the ring has passed. In this way, it prevents passage of the ring in the other direction/downwards and can transfer downward loads from the inner section 3. Horizontal centering and securing is done by means of rams that can be pushed out in a radial direction and which clamp the inner section.

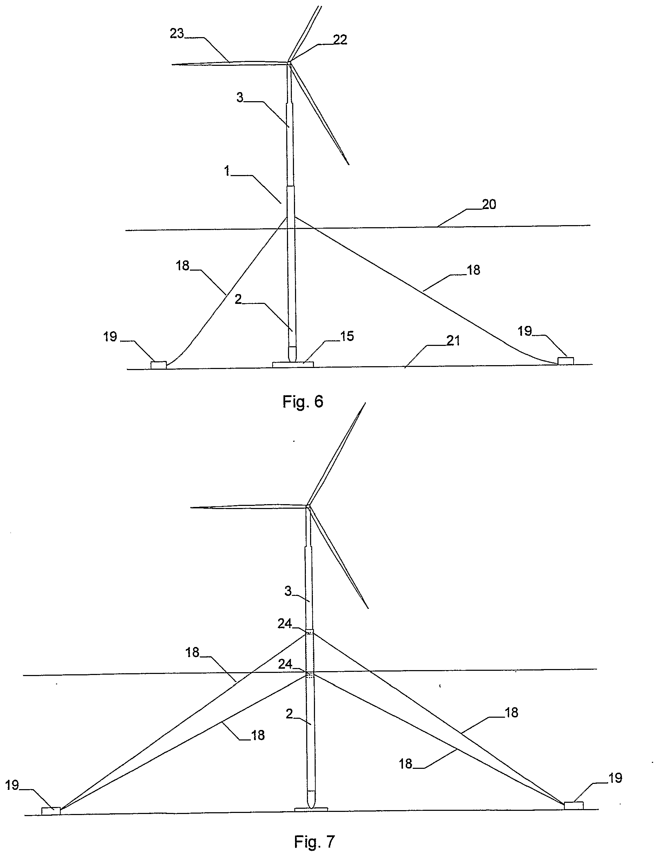

Figure 6 shows the tower 1 resting on a substructure 15 and integrated in a support system which in this exemplary embodiment includes a mooring consisting of three cables 18, symmetrically positioned in the horizontal plane, which on one side are mounted to the tower 1 and on the other side are mounted to anchors 19 installed on a seabed 21 below a water surface 20. The tower 1 is shown used for a turbine 22 with wind-driven rotor blades 23. As described above, a fully installed tower 1 will comprise an outer section 2 and a telescopically pushed-out inner section 3. The rigidity and pre-tensioning of the cables is determined on the basis of requirements for load transfer and acceptable dynamic behaviour of the tower.

Figure 7 shows the tower as illustrated in Figure 6, where it is secured by four pairs of cables 18, each pair lying in the same vertical plane and both cables per pair being connected to one anchor 19.

The cables 18 can be mounted at the same height as connections between the outer section 2 and the inner section 3 and in this way a favourable absorption of the forces between the two sections is obtained. The broken line shows the area in which the outer section 2 overlaps the inner section 3, and locations for devices 24 which fasten the sections together (as described above).

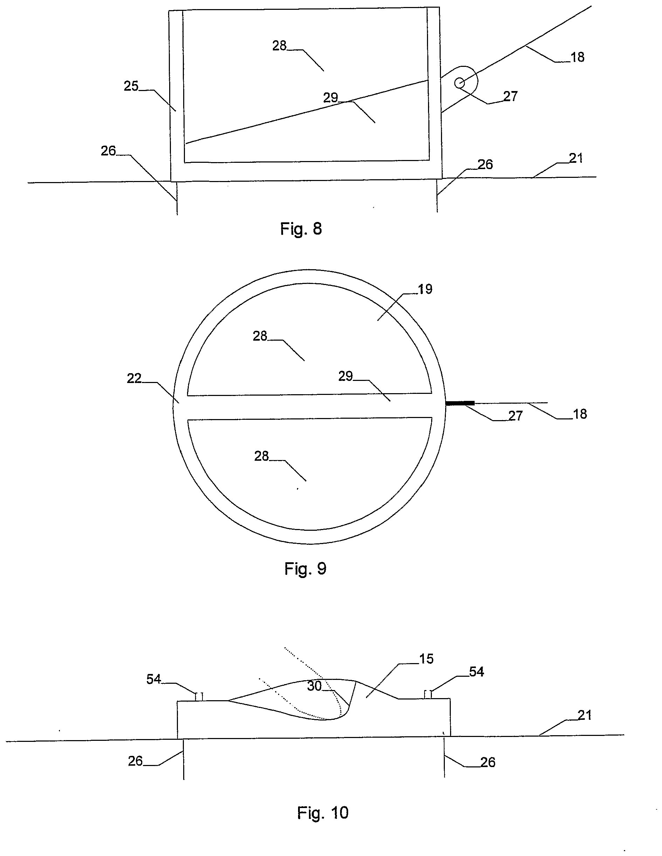

Figure 8 shows a vertical section through a gravity-penetrated anchor type 19 which can, with modifications, be used for all bottom conditions, water depths and typical loads. The installation of this inventive anchor 19 can advantageously be done using tow boats equipped with a winch of sufficient capacity as explained below. Loads from the tower (the tower is not shown in Fig. 8) are transferred to the seabed 21 through the cables 18, via an attachment device 27 fastened to an upward open box 25 resting on the seabed 21, and a skirt 26 penetrated into the seabed. The necessary weight the anchor requires for transferring the loads into the seabed is obtained by ballast that is placed inside the ballast chamber 28. The weight and penetration depth of the skirt 26 is an optimisation goal for the design of the anchor, where usually it is endeavoured to utilise most of the weight to dimension maximum depth of skirt, which in turn means a smaller anchor. In the illustrated exemplary embodiment, the box is a circular cylinder with a closed bottom, both parts cast in concrete and stiffened with a centrically positioned stiffening wall 29. The skirt 26 may advantageously be of steel plate which, because of less penetration resistance than a concrete skirt would experience, can penetrate deeper into the seabed and thus generate the desired holding power with reduced weight and hence reduced size.

Figure 9 shows a horizontal section through the anchor 19 with ballast chamber 28, stiffening wall 29, cable 18 (in part) and attachment device 27.

Figure 10 shows a possible configuration of the substructure 15 that is used for erection and support of the tower 1. The substructure 15 is dimensioned for receiving horizontal loads during the erection of the tower and, in an installed state, for loads from waves and wind and the weight of the tower and vertical components from the tension in the cables. As a rule, it is advantageous to equip the substructure 15 with a skirt 26 that penetrates into the seabed 21 and thus increases the bearing capacity of the substructure. The top of the substructure 15 has a recess 30 so formed as to allow the tower (end shown in broken lines) to have support in both the installation phase and the operation phase when substantial horizontal and less substantial vertical loads are to be transferred into the seabed. If an exact distance from the substructure 15 to anchors (not shown) holding cables (not shown) is necessary, it may be advantageous to use a temporary distance wire (not shown), one end of which runs freely in a guide 54 which forms a circle and just one wire can control all anchors.

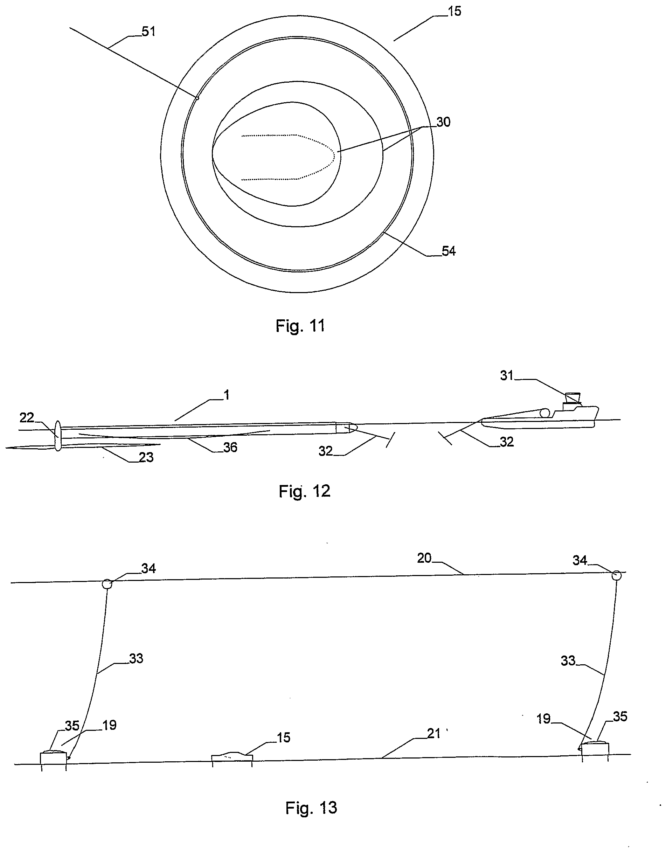

Figure 11 shows substructure 15 from above where the recess 30 for receiving the tip of the tower (indicated in a broken line) is shown, and the guide 54 for temporary wire 51 of a specific length (only a part shown) that is extended to an anchor (not shown) that is installed. Because of the elasticity in the anchor cables, and to a lesser extent also in the tower structure itself, small angular deviations in the foot of the tower from the tower's position of rest will occur. In this exemplary embodiment, the foot of the tower rests on the substructure as a joint where the relative angle changes are for the most part in the form of elastic deformations of both bodies in the contact face. Alternatively, the lower part of the tower in installed position may have a sufficiently large contact area with the substructure, e.g., of a conical face that enters a corresponding conical part of the substructure so that because of negligible elastic motions in the actual contact, the loads are passed into the substructure and the bearing face against the seabed.

Figures 12-17 shows the main steps in transport to the installation field and erection of the tower 1.

Figure 12 shows one way of towing the tower 1 to the installation site, namely towing whilst the tower lies approximately horizontal in the water surface. Towing at controlled depths may also be appropriate if structures are to be protected as much as possible from stresses exerted by waves. A common feature for the towing methods is that the tower is ballasted to desired net buoyancy. Towing in the surface is typically carried out by a tow boat 31 that is connected by a towing wire 32 (only shown in part because of the distance between the boat and the tower). In narrow waters, it may be necessary to use a support boat (not shown) which can also be used during the rest of the tow and in particular during the actual installation. The inner section 3 of the tower 1 is ballasted with water and forced up with gas as explained above. Typical dimensions of the tower give sufficient buoyancy also to include different equipment, e.g., the whole wind power unit consisting of, for example, a turbine 22 and rotor blades 23. Depending on the type of mooring cables chosen and the chosen method of connecting them to the tower, it may be appropriate that the uppermost part of these cables 36 are mounted already at the fabrication site. For the further description it is assumed that these are mounted and secured for towing. The towing of towers with external equipment can also be carried out so that the equipment, e.g., turbine and rotor blades, are not subjected to stresses from the water, e.g., by placing the upper part of the tower with the equipment on a barge.

Figure 13 shows the installation site prepared for installation of the tower itself, where the substructure 15 and three anchors 19 (only two are shown) are installed on a seabed 21. The anchor is ballasted with solid ballast 35, e.g., iron ore or olivine. Mooring cables 33 are at one end connected to respective anchors 19, and at another end connected to respective buoys 34 at the water surface 20.

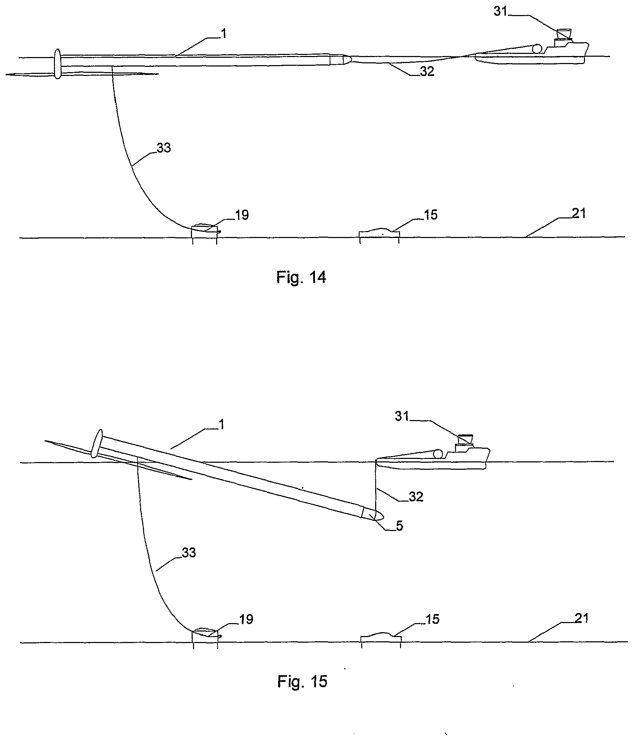

Figure 14 shows the installation site where the towing vessel holds the floating tower 1 in position whilst the crew on the support vessel (not shown) have taken up the end of the mooring cable 33 from two (only one is shown, the second anchor and the second line are hidden behind the first) of three anchors on the "upside" i.e., the side belonging to the two first described anchors (the "downside" thus relates to the third anchor on the opposite side of the substructure 15) and connected it to the uppermost part of the mooring line which was connected before the towing of the tower commenced.

The next phase is shown in Figure 15 where the bottom end 5 of the tower 1 has been opened for free ballasting with seawater that results in the tower being given additional weight at this end, displacing the centre of gravity and thus the tilt. As explained above, the tilt helps to displace the ballast water gradually downwards in the tilting tower. The tow boat 31 with winch and wire 32 (this can advantageously be the tow wire itself) controls the tilting and the lowering of the tower 1 onto the substructure 15. After the bottom end 5 has been lowered onto the substructure 15, the towing and lowering wire 32 is disconnected in order to then be connected to an upper part of the tower which is above the surface.

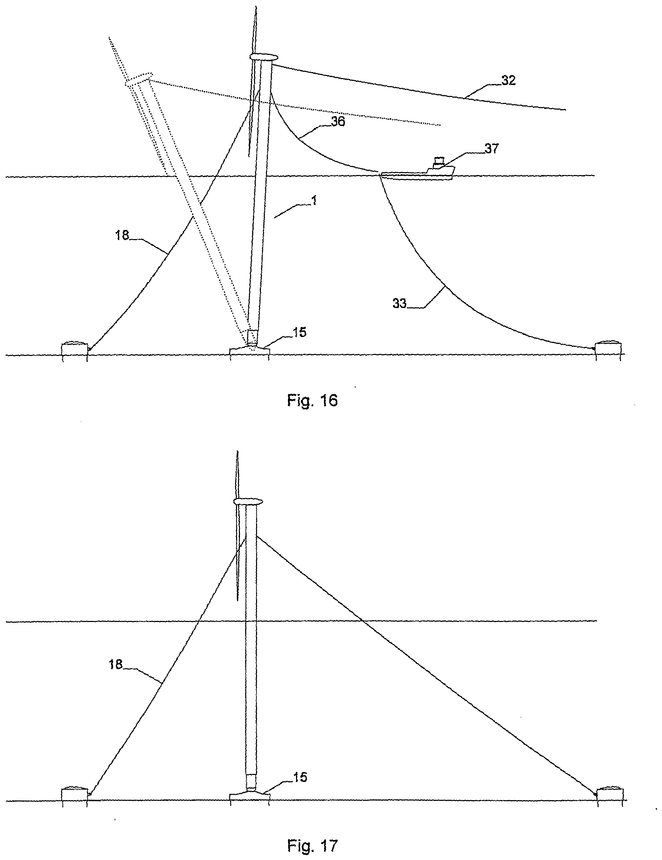

As the tow boat begins to pull on the reconnected wire to the upper part of the tower, the tower begins to rotate to approximately a vertical position in the water, as shown in solid lines in Figure 16 (broken lines show the tower on the way up). During this process cables 18 are tensioned gradually. These cables may have a length that is greater than they have once the tower is fully installed. This means that the tower 1 is allowed to lean outwards after having passed the vertical and is thus more stable in the inclined position when connection of cables on the "downside" of the tower is carried out. Another significant advantage of the cable 18 initially being slightly longer than in the final position is that the cables on the downside of the tower are slack and thus easier to connect to the preinstalled cable 33 and the upper cable 36 that were mounted before the start of the tow. The connection can be done on board a support vessel 37.

When the cables 33 and 36 have been connected to form a mooring cable 18, the tow line 32 and the towing vessel are released and the tensioning of the mooring cables is carried out. This can be done in several ways either in that the upper end towards the tower or the lower end of the tower is pulled and locked into the new position.

The tensioning must be done in two or more successive rounds to get the tower vertical and to obtain the desired tension in the cables that is decisive for the dynamics of the whole system when it is subjected to dynamic loads. This situation with ready tensioned cables is shown in Figure 17.

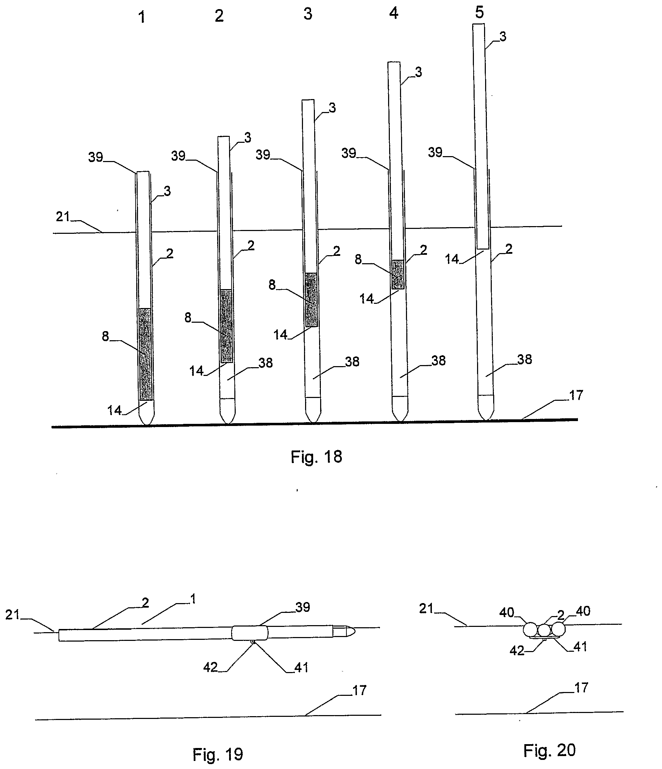

In the next phase the inner section 3 of the tower 1 is pushed out by buoyancy. This is shown in principle in Figure 18 which is a sectional view through the outer section 2 and the inner section 3 with ballast water 8. The pushing out process is illustrated here in five phases where phase 1 shows the situation after completed mounting of the assembled tower and before the push out begins. Phases 2, 3 and 4 show situations after water outlet 14 in the outer section 3 has been opened (see also Figure 2 for water outlet 14). The gas pressure in the inner section 3 pushes ballast water out into the space 38 which is freed in the outer section 2 by the inner section 3 moving up. In phase 5 all ballast water is forced out of the inner section 2 and the buoyancy that acts on section 3 ensures that the connection mechanism (Figure 5) is moved into a position in which the connection mechanism can be actuated. It is important that the water surface in the outer section 2 during push-out, especially in later phases 3, 4 and 5, is kept at the uppermost end 39 of the tower in order to obtain desired buoyancy for push-out of the inner section 3.

The erection of the assembled tower shown in Figs. 16 and 17 can be carried out at a depth which is in proportion to the pulling force that the installation boat can exert to raise the tower from a tilted position. The deeper the water, the more upright the tower is to begin with and the smaller the force required to get the tower into a vertical position, and in a sufficient water depth erection does not require the assistance of any external pulling force. This erection force must also be taken by the substructure and may be decisive for its size and design. To reduce this force and/or use this concept in shallower waters, a reusable buoyancy element 39 can be used which adds a vertical upward load to the tower during erection. Figures 19 - 22 show a possible solution for such an element.

Figure 19 shows the tower 1 in a horizontal position in the body of water 21 with buoyancy element 39 connected to the outer section 2 by a fastening device consisting of two members: member 41 that is a part of the element 39 and member 42 that is mounted on the outer section 2. In principle, member 42 is a hook which holds a stay 41 and forms a connection that is strong in a direction parallel to the longitudinal axis of the tower, namely the direction in which both the resistance force during the tow and the element's buoyancy exploited for erection of the tower act. Small random forces in the opposite direction are taken up by transport safety fittings which prevent the element from unintentionally coming free from the connection. The position of the element 39 along the longitudinal axis is calculated so that its buoyancy is exploited optimally. In such a calculation it is the following parameters that are dominant: water depth, weight of the tower and its distribution along the longitudinal axis and the force with which the vessel can pull during the erection of the tower.

The element 39 consists of two cylindrical tanks 40, each of them located on each side of the outer section 2 as shown in Figure 20. The tanks are connected on the underside of the outer section 2 inside a unit/structure. The figure also shows the connecting members 41 and 42. It may be advantageous to equip the tanks 40 for ballasting with water, pressurising with gas and deballasting.

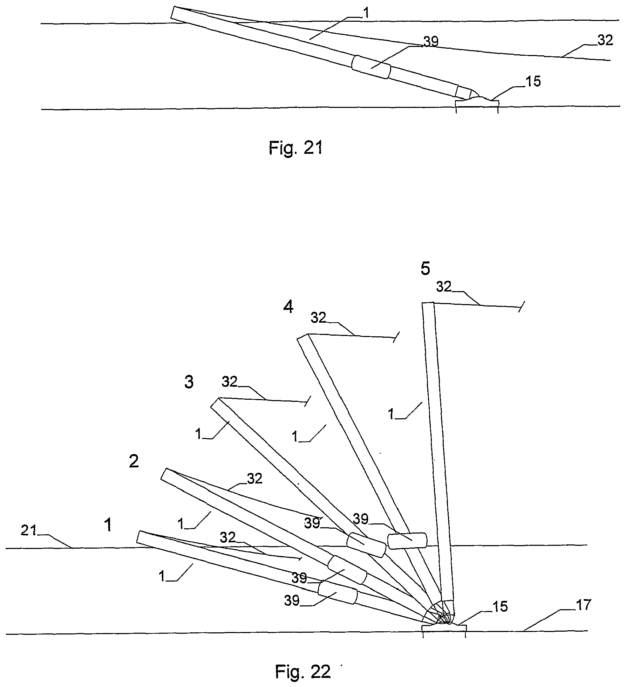

Figure 21 shows the tower 1 in retracted position with buoyancy element 39 in a slanted position of balance with the lower end resting on substructure 15 in relatively shallow water in which forces for erection would be very great if the element were not used. Towing wire 32 is reconnected from the lower end to which it was connected during the tow to the installation site to the upper end.

Figure 22 shows five phases of the erection operation assisted by buoyancy element 38. Phase 1 shows the starting position, 2 and 3 show phases of the erection in which the buoyancy element is active, phase 4 in which the buoyancy element 38 is released because of own weight from the tower 1, and final phase 5 in which the erection takes place only with the aid of tension in line 32 pulled by the installation vessel. The raising begins in that the transport safety fittings are removed from the connection described above and deballasting with the aid of overpressure in the tanks of element 39 is started. Immediately after deballasting has started, the element begins to rise into a new position of balance shown here as phase 2. To continue the rotation into a vertical position, the installation boat starts to pull on wire 32 and rotation continues. After a while the element 39 emerges from the water and thus reduces the vertical force from it on the tower 1 until the element is released from the tower and remains lying on the water surface 21. This has happened in a position in which the installation boat has sufficient capacity to raise the tower further to the vertical.

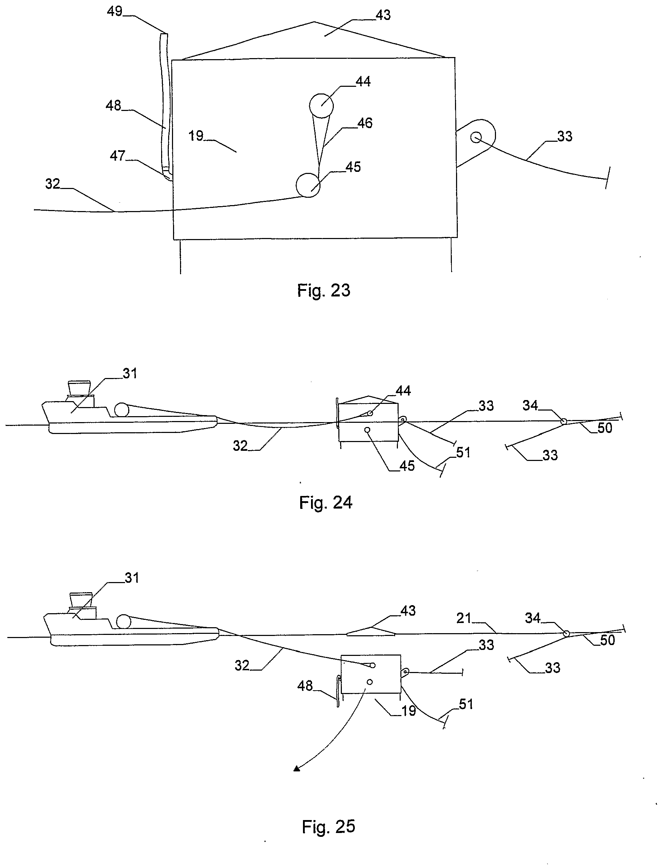

Transport and installation of anchors and substructure can advantageously be done by a towing vessel. Figure 23 is a side view of anchor 19 with connected lowermost part of a mooring cable 33 (only a small part shown) with buoy and line (not shown) connected to the upper end of the cable. The top of the anchor 19 may, for towing to the installation site, be closed with a cover 43 that is to prevent water (from wave spray, rainwater) from collecting in the bottom of the anchor box. The cover is self-floating. For submersion to the seabed, the anchor is equipped on two sides with upper trunnions 44 and for towing with two lower trunnions 45. Trunnions 44 and 45 are equipped with transport safety fittings (not shown, known) to prevent wire 32 from coming out of position. Towing and lowering wire 32 is terminated with a soft eye 46 for easy connection to and disconnection from upper trunnion 44. For free ballasting with water, the anchor is equipped with a water passage 47 with a hose 48 having an open end 49 which, during towing, is secured in position sufficiently high above the water surface.

The lower part of the mooring cable 33 can, for towing to the field, preferably be extended by a buoy (shown in Fig. 13 with reference numeral 34) on its upper end which holds the end of the cable at the surface. Alternatively, the lower part of cable 33 with buoy can, for transport to the field, be stored on and secured in a seaworthy manner to cover 43.

Figure 24 shows tow boat 31 with anchor 19 after arrival at the installation site. Tow boat 31 has hauled in most of the wire length that was used during the tow.

Furthermore, the wire 32 has been released from the lower trunnion 45. The lower part of the cable 33 has been extended out (either from the tow-out point, or this is done in the field if the cable was transported coiled up on the anchor) and held in desired tension by means of ancillary line 50 and a support vessel (not shown). The support vessel also has mounted distance wire 51 (if used) which on the other side is connected to a preinstalled substructure (not shown). This is the situation before submersion can begin.

Submersion to the seabed is done in two steps. In the first of these, the anchor 19 is transferred from a floating position to a position in which it hangs in the lowering wire under the stem of the towing vessel. This is done by admitting seawater into the ballast chamber in the anchor which results in the buoyancy of the anchor gradually decreasing and the anchor going under the water surface and moving downwards in an almost circular path (shown in Fig. 25 by an arrow) controlled by a lowering wire which gradually takes up the submerged weight of the anchor. This is shown in Figure 25.

Free flow of ballast water into the anchor was initiated in that the hose 48 was released and the whole hose with its open end 49 put in the water, which led to seawater beginning to flow in. When a certain amount of water was inside, the anchor left the surface 21 and the cover 43, because of its buoyancy, was floating on the surface and ready to be secured for re-use. The cable part 33 is held slack during this phase so that unduly large loads are not mobilised therein. After the anchor has assumed a steady position under the stern of the towing vessel, it is winched down to the seabed. At a small height above the seabed, positioning is effected in that distance line 51 is tensioned to obtain desired distance from the preinstalled substructure and is then moved in a circular path to the correct orientation in the horizontal plane. The anchor is subsequently set down on the seabed, the lowering line 32 is disconnected by tilting the end eye 46 out of position from the trunnion 44. The lower cable part 33 is brought into the desired position so that it is not an obstacle for the last operation in the installation of anchors which are ballasted with solid ballast, e.g., rock, iron ore, concrete blocks. This operation is done independent of the installation of anchors, but in the time period before the installation of the tower.

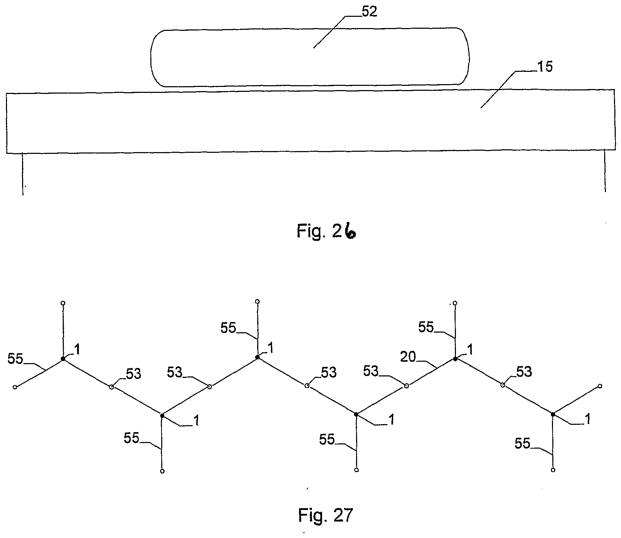

Fig. 26 shows a substructure 15 equipped with buoyancy tank 52 which makes it possible to transport and install the substructure by means of a towing vessel. The buoyancy tank 52 may be re-usable or form a permanent part of the substructure 15. The buoyancy tank 52 supplies the substructure with sufficient buoyancy to enable it to float on the surface, and can be installed following the same principles as described in Figures 24 and 25 for anchors. Installation is carried out by opening the element 52 towards the sea, thereby allowing the water to flow in freely. The substructure with mounted buoyancy tank thus loses net buoyancy and moves downwards in a circular path in under the stern of the vessel in position for lowering to the seabed. If the submerged weight of the substructure is far too high to be handled by the available towing vessel, the tank 52 is divided in principle into two chambers, one of which is filled with water during the transfer from floating to hanging position whilst the other chamber is not filled with water until the substructure has been put down on the seabed.

Figure 27 shows a possible positioning of several towers 1, each of them supported by three anchors 55, and where some of the cables are connected in pairs to common anchors 53. Since the anchors 53 are loaded with horizontal loads that act in opposite directions and thus, to a great extent, neutralise each other, this is a favourable utilisation of these anchors. For other numbers of anchors per tower, there are similar favourable positions which reduce the total number of anchors.

The arrangement and method according to the invention are particularly suitable for water depths in the range of about 25 metres to about 100 metres.

## Claims

1. A tower structure (1) for use in a body of water, comprising a hollow outer section (2) with a first end (4) equipped with an opening, wherein an inner section (3) is telescopically accommodated in the cavity of the outer section (2) through the opening in the said first end and is telescopically movable in the outer section (2) from a position in which essentially the whole of the inner section is accommodated in the outer section, to a position in which a length of the inner section projects above the first end of the outer section, **characterised in that** the inner section is divided by means of partitions (7) into a plurality of chambers (6, 6') fluid-connected via ducts (10') and openings (9), where at least one chamber is fluid-connected via at least one duct (10) to a source for a ballasting fluid (8), and where a chamber at a second end (5) of the outer section has an inlet for ballast water to provide for an initial tilt of the tower structure, whereby the chambers (6, 6') can selectively, and by a gradual flow through the openings (9), be filled with ballasting fluid, the openings (9) being situated in the top of all the partitions (7) when the tower structure is in a horizontal position.

2. A tower structure according to claim 1, **characterised in that** the inner section (3) is equipped with at least one outlet (14) out of at least one of the chambers (6), through which ballasting fluid can selectively be filled in a cavity at the second end (5) of the outer section.

3. A tower structure according to claim 1, **characterised in that** the inner section and the outer section comprise support and locking means (16, 17, 24) for locking the two sections in a desired position in relation to one another.

4. A tower structure according to claim 1, **characterised in that** the second end (5) of the outer section (2) is configured for connection to a substructure (15) placed on the bottom (21) below the body of water.

5. A method for installation of the tower structure as disclosed in claims 1-4 in a body of water, **characterised by** the steps of:
a) inserting the inner section (3) into the outer section (2) and placing the connected sections floating, essentially horizontally, in a body of water having a water surface (21);
b) filling a selection of chambers (6') with ballasting fluid via ducts (10, 10');
c) closing inlet valves (13) for a ballasting fluid and pressurising the chambers (6, 6') using a gas;
d) towing the structure in the body of water to an installation site, while still in a horizontal position;
e) opening an inlet into and preferably also an outlet out of a chamber in a lowermost part (5) of the outer section to fill the chamber with ballasting fluid, the filling giving the tower a tilt, which then causes the ballasting fluid originally in ballast chamber (6') to flow to and collect in the lowermost part of the inner section (3), whereby the tower structure (1) is made to rotate in the body of water and the second end (5) of the outer section moves towards a substructure (15) on the bottom below the body of water; raising the tower structure to an almost vertical position in the body of water, the second end of the outer section being supported by the substructure (15) on the bottom;
g) by means of gas pressure, displacing all or a predetermined amount of the ballasting fluid out of the inner section and the outer section, whereby the inner section moves relative to the outer section so that a portion of the inner section extends a distance beyond the first end of the outer section, preferably above the water surface (21);
h) locking the inner section and the outer section in relation to one another.

6. A method according to claim 5, **characterised in that** the tower structure (1) is raised into an almost vertical position in the body of water with the aid of an external buoyancy element (38).

## Patentansprüche

1. Turmkonstruktion (1) zur Verwendung in einem Wasserkörper, umfassend einen hohlen Außenabschnitt (2) mit einem ersten Ende (4), das mit einer Öffnung versehen ist, wobei ein Innenabschnitt (3) in dem Hohlraum des Außenabschnitts (2) durch die Öffnung in dem ersten Ende teleskopartig aufgenommen ist und in dem Außenabschnitt (2) von einer Position, in der im Wesentlichen der gesamte Innenabschnitt in dem Außenabschnitt untergebracht ist, in eine Position, in der eine Länge des Innenabschnitts über das erste Ende des Außenabschnitts hinausragt, teleskopartig bewegbar ist, **dadurch gekennzeichnet, dass** der Innenabschnitt mittels Trennwänden (7) in mehrere Kammern (6, 6') unterteilt ist, die über Kanäle (10') und Öffnungen (9) fluidverbunden sind, wobei mindestens eine Kammer über mindestens eine Leitung (10) mit einer Quelle für ein Ballastfluid (8) fluidverbunden ist, und wobei eine Kammer an einem zweiten Ende (5) des äußeren Abschnitts einen Einlass für Ballastwasser aufweist, um eine Anfangsneigung der Turmkonstruktion bereitzustellen, wobei die Kammern (6, 6') selektiv und durch eine allmähliche Strömung durch die Öffnungen (9) mit Ballastfluid gefüllt werden können, wobei die Öffnungen (9) oben in allen Trennwänden (7) angeordnet sind, wenn sich die Turmkonstruktion in einer horizontalen Position befindet.

2. Turmkonstruktion nach Anspruch 1, **dadurch gekennzeichnet, dass** der Innenabschnitt (3) mit mindestens einem Auslass (14) aus mindestens einer der Kammern (6) ausgestattet ist, durch den Ballastflüssigkeit selektiv in einen Hohlraum am zweiten Ende (5) des äußeren Abschnitts gefüllt werden kann.

3. Turmkonstruktion nach Anspruch 1, **dadurch gekennzeichnet, dass** der Innen- und der Außenabschnitt Stütz- und Verriegelungsmittel (16, 17, 24) zum Verriegeln der beiden Abschnitte in einer gewünschten Position zueinander aufweisen.

4. Turmkonstruktion nach Anspruch 1, **dadurch gekennzeichnet, dass** das zweite Ende (5) des äußeren Abschnitts (2) zum Anschluss an eine Unterkonstruktion (15) ausgebildet ist, die auf dem Boden (21) unterhalb des Wasserkörpers angeordnet ist.

5. Verfahren zum Aufbau der Turmkonstruktion wie in den Ansprüchen 1- 4 offenbart, in einem Wasserkörper, **gekennzeichnet durch** die folgenden Schritte:
a) Einsetzen des Innenabschnitts (3) in den äußeren Abschnitt (2) und schwimmend Platzieren der verbundenen Abschnitte, im Wesentlichen horizontal, in einem Wasserkörper mit einer Wasseroberfläche (21);
b) Füllen einer Auswahl von Kammern (6') mit Ballastfluid über Leitungen (10, 10');
c) Schließen von Einlassventilen (13) für ein Ballastfluid und Druckbeaufschlagung der Kammern (6, 6') unter Verwendung eines Gases;
d) Ziehen des Bauwerks in dem Wasserkörper zu einem Aufstellungsort, während es sich noch in einer horizontalen Lage befindet;
e) Öffnen eines Einlasses in und vorzugsweise auch eines Auslasses aus einer Kammer heraus in einem untersten Teil (5) des äußeren Abschnitts, um die Kammer mit Ballastfluid zu befüllen, wobei die Füllung dem Turm eine Neigung verleiht, die dann bewirkt, dass das sich ursprünglich in der Ballastkammer (6') befindende Ballastfluid zu dem untersten Teil des Innenabschnitts (3) fließt und sich dort sammelt, wobei die Turmkonstruktion (1) in dem Wasserkörper gedreht wird und sich das zweite Ende (5) des äußeren Abschnitts zu einem Unterbau (15) auf dem Boden unterhalb des Wasserkörpers bewegt;
f) Anheben der Turmkonstruktion in eine nahezu vertikale Position in dem Wasserkörper, wobei das zweite Ende des äußeren Abschnitts von der Unterkonstruktion (15) auf dem Boden getragen wird;
g) mittels Gasdruck, Verdrängen des Ballastfluids ganz oder zu einem vorbestimmten Teil aus dem Innenabschnitt und dem äußeren Abschnitt, wobei sich der Innenabschnitt relativ zum äußeren Abschnitt bewegt, so dass sich ein Teil des Innenabschnitts über das erste Ende des äußeren Abschnitts hinaus, vorzugsweise über der Wasseroberfläche (21), um einem Abstand erstreckt;
h) gegenseitiges Verriegeln des Innenabschnitts und des äußeren Abschnitts.

6. Verfahren nach Anspruch 5, **dadurch gekennzeichnet, dass** die Turmkonstruktion (1) mit Hilfe eines äußeren Auftriebselements (38) in eine nahezu vertikale Position in dem Wasserkörper angehoben wird.

## Revendications

1. Structure de tour (1) pour utilisation dans un plan d'eau, comprenant une section extérieure creuse (2) avec une première extrémité (4) équipée d'une ouverture, dans laquelle une section intérieure (3) est reçue de façon télescopique dans la cavité de la section extérieure (2) à travers l'ouverture dans ladite première extrémité et est mobile de façon télescopique dans la section extérieure (2) d'une position dans laquelle essentiellement la totalité de la section intérieure est reçue dans la section extérieure, à une position dans laquelle une longueur de la section intérieure fait saillie au-dessus de la première extrémité de la section extérieure, **caractérisée en ce que** la section intérieure est divisée au moyen de cloisons (7) en une pluralité de chambres (6, 6') connectées de manière fluidique par l'intermédiaire de conduits (10') et d'ouvertures (9), où au moins une chambre est connectée de manière fluidique par l'intermédiaire d'au moins un conduit (10) à une source pour un fluide de ballastage (8), et où une chambre au niveau d'une seconde extrémité (5) de la section extérieure comporte une entrée pour eau de ballastage pour fournir une inclinaison initiale à la structure de tour, moyennant quoi les chambres (6, 6') peuvent sélectivement, et par un écoulement progressif à travers les ouvertures (9), être remplies d'un fluide de ballastage, les ouvertures (9) étant situées en haut de toutes les cloisons (7) lorsque la structure de tour est dans une position horizontale.

2. Structure de tour selon la revendication 1, **caractérisée en ce que** la section intérieure (3) est équipée d'au moins une sortie (14) d'au moins l'une des chambres (6), à travers laquelle un fluide de ballastage peut sélectivement être chargé dans une cavité au niveau de la seconde extrémité (5) de la section extérieure.

3. Structure de tour selon la revendication 1, **caractérisée en ce que** la section intérieure et la section extérieure comprennent un moyen de soutien et de verrouillage (16, 17, 24) pour verrouiller les deux sections dans une position souhaitée l'une par rapport à l'autre.

4. Structure de tour selon la revendication 1, **caractérisée en ce que** la seconde extrémité (5) de la section extérieure (2) est configurée pour une connexion à une sous-structure (15) placée au fond (21) sous le plan d'eau.

5. Procédé d'installation de la structure de tour selon les revendications 1 à 4 dans un plan d'eau, **caractérisé par** les étapes de :
a) insertion de la section intérieure (3) dans la section extérieure (2) et mise en place des sections connectées flottant, essentiellement horizontalement, dans un plan d'eau ayant une surface d'eau (21) ;
b) remplissage d'une sélection de chambres (6') d'un fluide de ballastage par l'intermédiaire de conduits (10, 10') ;
c) fermeture de vannes d'entrée (13) pour un fluide de ballastage et pressurisation des chambres (6, 6') en utilisant un gaz ;
d) remorquage de la structure dans le plan d'eau jusqu'à un site d'installation, tandis qu'elle est toujours en position horizontale ;
e) ouverture d'une entrée dans une chambre et de préférence également d'une sortie de celle-ci dans une partie la plus inférieure (5) de la section extérieure pour remplir la chambre d'un fluide de ballastage, le remplissage donnant une inclinaison à la tour, ce qui amène alors le fluide de ballastage à l'origine dans la chambre de ballastage (6') à s'écouler vers et à s'accumuler dans la partie la plus inférieure de la section intérieure (3), moyennant quoi la structure de tour (1) est entraînée en rotation dans le plan d'eau et la seconde extrémité (5) de la section extérieure se déplace vers une sous-structure (15) au fond sous le plan d'eau; élévation de la structure de tour dans une position presque verticale dans le plan d'eau, la seconde extrémité de la section extérieure étant soutenue par la sous-structure (15) au fond ;
g) au moyen d'une pression gazeuse, évacuation de la totalité ou d'une quantité prédéterminée du fluide de ballastage de la section intérieure et de la section extérieure, moyennant quoi la section intérieure se déplace par rapport à la section extérieure de sorte qu'une portion de la section intérieure s'étend sur une certaine distance au-delà de la première extrémité de la section extérieure, de préférence au-dessus de la surface de l'eau (21) ;
h) verrouillage de la section intérieure et de la section extérieure l'une par rapport à l'autre.

6. Procédé selon la revendication 5, **caractérisé en ce que** la structure de tour (1) est élevée dans une position presque verticale dans le plan d'eau à l'aide d'un élément de flottaison externe (38).
